# FASCICULE DE BREVET EUROPEEN

(11) **EP 3 532 531 B1**
(45) Date de publication et mention de la délivrance du brevet: **07.06.2023**
(21) Numéro de dépôt: 17794030.1
(22) Date de dépôt: 26.10.2017
(51) Int. Cl.: C08J 3/20, C08G 64/02, C08G 64/42, C08K 5/17, H01M 4/04, H01M 4/13, H01M 4/139, H01M 4/62, H01M 10/0525, C07C 68/00

(54) **PROCEDE DE DEGRADATION D'UN POLY(ALCENE CARBONATE), UTILISATIONS POUR PREPARER UNE ELECTRODE DE BATTERIE LITHIUM-ION ET LE FRITTAGE DE CERAMIQUES**
VERFAHREN ZUM ABBAU EINES POLY(ALKENCARBONATS), VERWENDUNG ZUR HERSTELLUNG EINER ELEKTRODE EINER LITHIUM-IONEN-BATTERIE UND ZUM SINTERN VON KERAMIK
PROCESS FOR THE DEGRADATION OF A POLY(ALKENE CARBONATE), USES FOR PREPARING A LITHIUM-ION BATTERY ELECTRODE AND THE SINTERING OF CERAMICS

(30) Priorité: 28.10.2016 FR 1660541
(43) Date de publication de la demande: 04.09.2019
(73) Titulaire: Hutchinson, 75008 Paris (FR)
(72) Inventeur: SONNTAG, Philippe, 77210 Avon (FR); DUFOUR, Bruno, 77430 Champagne Sur Seine (FR); PREBE, Arnaud, Terrebonne, J6V1K7, QC (CA)
(74) Mandataire: Plasseraud IP
(86) Numéro de dépôt international: PCT/FR2017/052959
(87) Numéro de publication internationale: WO 2018/078292

(56) Documents cités:
- WO-A1-2015/124835
- WO-A1-2015/124835
- US-A- 4 686 274

## Description

La présente invention concerne un procédé de dégradation d'au moins un polymère d'un alcène carbonate, une composition polymérique pour électrode de batterie lithium-ion comprenant un résidu de dégradation obtenu par ce procédé, un procédé de préparation de cette composition, une telle électrode, une batterie lithium-ion l'incorporant et une autre utilisation de ce procédé de dégradation pour le frittage de céramiques.

Il existe deux sortes principales de batteries d'accumulateurs au lithium : les batteries lithium métal, où l'électrode négative est composée de lithium métallique (matériau qui pose des problèmes de sécurité en présence d'un électrolyte liquide), et les batteries lithium-ion, où le lithium reste à l'état ionique.

Les batteries lithium-ion sont constituées d'au moins deux électrodes faradiques conductrices de polarités différentes, l'électrode négative ou anode et l'électrode positive ou cathode, électrodes entre lesquelles se trouve un séparateur qui est constitué d'un isolant électrique imbibé d'un électrolyte aprotique à base de cations Li⁺ assurant la conductivité ionique. Les électrolytes utilisés dans ces batteries lithium-ion sont usuellement constitués d'un sel de lithium par exemple de formule LiPF₆, LiAsF₆, LiCF₃SO₃ ou LiClO₄ qui est dissous dans un mélange de solvants non aqueux tels que l'acétonitrile, le tétrahydrofuranne ou le plus souvent un carbonate par exemple d'éthylène ou de propylène.

Une batterie lithium-ion est basée sur l'échange réversible de l'ion lithium entre l'anode et la cathode lors de la charge et la décharge de la batterie, et elle possède une haute densité d'énergie pour une masse très faible grâce aux propriétés physiques du lithium. La matière active de l'anode d'une batterie lithium-ion est typiquement constituée de graphite ou en variante d'oxydes métalliques mixtes parmi lesquels on recense les oxydes de titane lithiés. Quant à la matière active de la cathode, elle est usuellement constituée d'un oxyde d'un métal de transition ou d'un phosphate de fer lithié. Ces matières actives permettent ainsi une insertion/désinsertion réversible de lithium dans les électrodes, et plus leurs fractions massiques y sont élevées, plus la capacité des électrodes est grande. Ces électrodes doivent également contenir une charge électriquement conductrice et, pour leur conférer une cohésion mécanique suffisante, un liant polymérique.

Les électrodes de batteries lithium-ion sont le plus souvent fabriquées par un procédé comprenant successivement une étape de dissolution ou de dispersion des ingrédients de l'électrode dans un solvant, une étape d'étalement de la solution ou dispersion obtenue sur un collecteur métallique de courant, puis enfin une étape d'évaporation du solvant. Les procédés utilisant un solvant organique (comme celui présenté dans le document US-A1-2010/0112441) présentent des inconvénients dans les domaines de l'environnement et de la sécurité, en particulier du fait qu'il est nécessaire d'évaporer des quantités élevées de ces solvants qui sont toxiques ou inflammables. Quant aux procédés utilisant un solvant aqueux, leur inconvénient majeur est que l'électrode doit être séchée de manière très poussée avant de pouvoir être utilisée, les traces d'eau limitant la durée de vie utile des batteries au lithium. On peut par exemple citer le document EP-B1-1 489 673 pour la description d'un procédé de fabrication d'une anode à base de graphite, d'un liant élastomère et utilisant un solvant aqueux.

On a donc cherché par le passé à fabriquer des électrodes pour batteries lithium-ion sans utilisation de solvants, notamment par des techniques de mise en oeuvre par voie fondue (par exemple par extrusion). Malheureusement, ces procédés par voie fondue génèrent des difficultés majeures dans le cas de ces batteries qui requièrent une fraction massique de matière active dans le mélange polymérique de l'électrode d'au moins 85 % pour que celle-ci présente une capacité suffisante au sein de la batterie. Or, à de tels taux de matière active, la viscosité du mélange devient très élevée et entraîne des risques de sur-échauffement du mélange et de perte de cohésion mécanique après sa mise en oeuvre.

Le document WO-A2-2015/124835 au nom de la Demanderesse présente des compositions d'électrode pour batterie lithium-ion préparées par voie fondue et sans évaporation de solvant, à l'aide d'une phase polymérique sacrificielle pouvant comprendre au moins un poly(alcène carbonate) que l'on mélange à une matière active, un liant élastomère et une charge conductrice, puis que l'on dégrade de préférence par décomposition thermique sous air. On obtient ainsi une plastification et une fluidité améliorées lors de la mise en oeuvre du mélange fondu en dépit d'une fraction massique de matière active utilisable dans la composition supérieure à 80 %, et une porosité contrôlée de cette dernière lui conférant une capacité d'électrode satisfaisante.

Les compositions d'électrodes présentées dans ce document sont globalement satisfaisantes pour une batterie lithium-ion, cependant la Demanderesse a cherché au cours de ses recherches récentes à améliorer encore leurs propriétés électrochimiques, en dégradant d'une autre manière cette phase polymérique sacrificielle.

Il est connu par l'article de Cupta M., Jayachandran P., Khol P., Photoacid generators for catalytic décomposition of polycarbonate, Journal of Applied Polymer Science, 2007, Vol. 105, pp. 2655-2662, de décomposer un polymère sacrificiel formé d'un poly(propylène carbonate) par un catalyseur acide généré par une irradiation UV du polymère, pour un système microélectromécanique ou microfluidique. L'utilisation de ce générateur photoacide de décomposition catalytique, si elle permet de diminuer la température de dégradation de ce polymère, présente l'inconvénient de compliquer le procédé de dégradation, de pénaliser son coût et de requérir l'irradiation du polymère, ce qui limite les épaisseurs de films obtenues et ne plaide donc pas en faveur de l'utilisation de ce procédé pour fabriquer une électrode de batterie lithium-ion.

Il est par ailleurs connu des documents US 4,686,274 A et US 5,015,753 de modifier un poly(alcène carbonate) polyol en le faisant réagir à chaud dans un flacon agité sous atmosphère d'azote avec un agent modifiant pouvant être une amine primaire de préférence avec un catalyseur organométallique de transestérification (e.g. du trihydrate de stannate de sodium). Le but recherché dans ces documents n'était pas de dégrader le poly(alcène carbonate) polyol, mais de modifier sa structure en greffant l'amine sur les chaînes toujours polymériques du polyol.

Un but de la présente invention est de proposer un nouveau procédé de dégradation d'au moins un polymère d'un alcène carbonate permettant de le dégrader encore plus efficacement tout en conférant des propriétés électrochimiques améliorées à une composition d'électrode incorporant le produit de cette dégradation, et ce but est atteint en ce que la Demanderesse vient de découvrir d'une manière surprenante que si l'on fait réagir à chaud et sous air un poly(alcène carbonate) polyol avec une amine primaire, alors on peut le dépolymériser rapidement, à une température relativement basse et quasiment totalement (i.e. avec une perte de masse proche de 100 %) ce qui rend ce procédé utilisable pour décomposer une phase sacrificielle comprenant au moins un poly(alcène carbonate) polyol notamment afin d'obtenir une composition d'électrode pour batterie lithium-ion préparée par voie fondue, ou pour le frittage de céramiques comprenant cette phase sacrificielle à titre de liant à dégrader.

Plus précisément, le procédé de dégradation selon l'invention est mis en oeuvre à une température comprise entre 120° C et 270° C et est tel qu'il comprend une réaction sous air d'une amine primaire avec ledit au moins un polymère qui est un poly(alcène carbonate) polyol, ladite réaction dépolymérisant ledit au moins un polymère pour l'obtention d'un résidu de dégradation non polymérique.

Par « amine primaire », on entend de manière connue dans la présente description un composé aminé comprenant au moins un atome d'azote lié à deux atomes d'hydrogène (groupe amine primaire NH₂).

Ladite réaction selon l'invention est mise en oeuvre dans une étuve en communication avec un flux d'air extérieur à l'étuve, ce flux d'air étant apte à extraire ledit au moins un poly(alcène carbonate) polyol au fur et à mesure de sa dégradation et étant de préférence formé d'air ambiant à la pression atmosphérique de 1,013 10⁵ Pa.

On notera que cette réaction sous air formant un milieu réactionnel semi-ouvert permet de décomposer ledit au moins un poly(alcène carbonate) polyol à la fois par voie chimique via ladite amine primaire, thermique via ladite étuve et par ce flux d'air (au contact duquel se trouve l'intérieur de l'étuve, maintenue ouverte à l'air ambiant qui se trouve par exemple à une température comprise entre 20° C et 30 °C) qui enlève ce polyol en cours de décomposition, contrairement à la réaction de modification du polyol en milieu fermé présentée dans US 4,686,274 ou US 5,015,753.

On notera également que la réaction chimique de décomposition dudit au moins un poly(alcène carbonate) polyol est rendue possible par les groupes d'extrémités hydroxyles de ce polyol avec lesquels interagit ladite amine primaire pour le dépolymériser.

Avantageusement, ledit au moins un poly(alcène carbonate) polyol peut être un diol aliphatique linéaire dont plus de 50 % en moles et de préférence plus de 80 % en moles des groupes d'extrémités sont des groupes hydroxyles avec lesquels interagit ladite amine primaire.

Encore plus avantageusement, ledit au moins un poly(alcène carbonate) polyol peut présenter une masse moléculaire moyenne en poids comprise entre 500 g/mol et 5000 g/mol, étant de préférence choisi parmi les poly(éthylène carbonate) diols et les poly(propylène carbonate) diols de masse moléculaire moyenne en poids comprise entre 700 g/mol et 2000 g/mol. A titre exemplatif et nullement limitatif, on peut avantageusement utiliser un poly(propylène carbonate) diol de formule suivante :

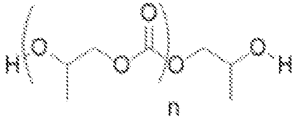

Egalement avantageusement, ladite amine primaire peut dépolymériser par ladite réaction ledit au moins un poly(alcène carbonate) polyol pour obtenir ledit résidu de dégradation non polymérique qui est vaporisable, le rapport massique dudit résidu sur le(s)dit(s) poly(alcène carbonate) polyol(s) initial(aux) étant compris entre 0,2 % et 5 % et de préférence entre 0,5 % et 2 %. En d'autres termes, la perte de masse dudit au moins un poly(alcène carbonate) polyol ainsi dégradé par cette réaction peut varier de 95 % à 99,8 % et de préférence de 98 % à 99,5 %.

On notera que cette dégradation selon l'invention permet avantageusement de se passer de tout catalyseur organométallique pour dépolymériser ledit au moins un poly(alcène carbonate) polyol, l'amine primaire et les conditions réactionnelles sous air et à chaud étant suffisantes pour mettre en oeuvre cette dépolymérisation.

Avantageusement, ladite réaction peut être mise en oeuvre entre 130° C et 260° C pendant au plus 2 heures seulement, pour obtenir ledit résidu de dégradation non polymérique.

Selon une autre caractéristique de l'invention donnée à titre d'exemple, ledit résidu de dégradation non polymérique peut être un mélange liquide-solide comprenant :
- entre 10 % et 90 % (de préférence moins de 75 %) en masse d'un premier résidu comprenant un carbonate dudit alcène et/ou des traces oligomériques dudit au moins un poly(alcène carbonate) polyol, et
- entre 90 % et 10 % (de préférence plus de 25 %) en masse d'un second résidu comprenant un produit de dégradation de ladite amine primaire (cette amine étant présente dans le résidu de dégradation sous une forme oxydée en raison de ladite réaction).

D'une manière générale, l'amine primaire peut optionnellement être choisie parmi les monoamines et polyamines aliphatiques ou aromatiques présentant :
- dans le cas où l'amine primaire est un monomère (premier mode de réalisation de l'invention), un point d'ébullition supérieur à 180° C et de préférence égal ou supérieur à 200° C à la pression atmosphérique de 1,013 10⁵ Pa, et
- dans le cas où l'amine primaire est un oligomère ou un polymère (second mode de réalisation de l'invention), une masse moléculaire moyenne en poids inférieure ou égale à 2000 g/mol et de préférence inférieure ou égale à 1000 g/mol.

On notera ainsi que, de préférence, ladite amine primaire n'est pas volatile (excluant par exemple l'éthylène amine) conformément audit premier mode et n'est pas constituée d'un polymère de masse moléculaire trop élevée conformément audit second mode, pour dépolymériser efficacement ledit au moins un poly(alcène carbonate) polyol.

Selon un premier exemple dudit premier mode, l'amine primaire est une monoamine aliphatique monomérique choisie parmi les alkylamines non volatiles, de préférence une alkylamine avec un groupe alkyl de C12 à C16 telle que la n-dodécylamine et la n-hexadécylamine.

Selon un second exemple dudit premier mode, l'amine primaire est une monoamine aromatique monomérique choisie parmi les anilines et les dérivés d'aniline, de préférence parmi les alkylanilines telles que les toluidines et les diméthylanilines.

Selon un troisième exemple dudit premier mode, l'amine primaire est une polyamine aliphatique monomérique, par exemple une diamine telle que la triéthylène tétramine (TETA, à deux groupes NH₂).

En référence audit second mode de l'invention, l'amine primaire peut être une polyamine aliphatique oligomérique ou polymérique de type polyéther amine, de préférence choisie parmi les diamines et les triamines d'un polyoxyalcène, par exemple :
- une diamine oligomérique répondant à la formule I : 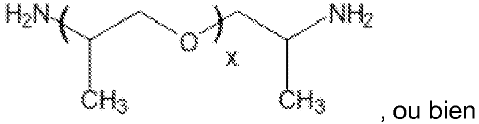
- une triamine oligomérique répondant à la formule II :

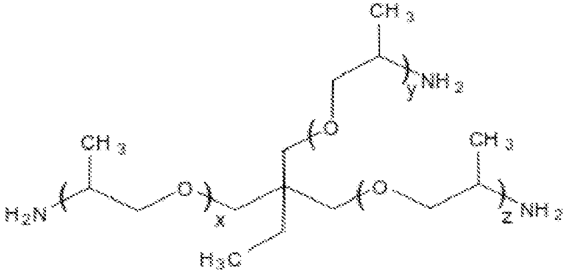

D'une manière générale en référence à l'ensemble des caractéristiques précitées du procédé de dégradation selon l'invention, le ratio massique amine primaire / poly(alcène carbonate) polyol(s) pour ladite réaction peut être avantageusement inférieur ou égal à 10 %, et encore plus avantageusement inférieur ou égal à 5, par exemple inclusivement compris entre 1 % et 4 %.

On notera que ce ratio réduit utilisable témoigne de la faible quantité d'amine primaire requise pour décomposer efficacement ledit au moins un poly(alcène carbonate) polyol, i.e. pour sa dépolymérisation sensiblement totale et rapide à une température modérée. Il en résulte que cette dégradation du ou des polyol(s) selon l'invention peut être réalisée à un coût réduit.

Un autre but de la présente invention est de proposer une nouvelle composition polymérique selon l'invention pour électrode de batterie lithium-ion contenant une matière active selon une fraction massique très élevée, une charge électriquement conductrice et un liant polymérique, tout en étant apte à conférer à l'électrode une capacité et une cyclabilité encore améliorées par rapport à celles de WO-A2-2015/124835.

Ce but est atteint en ce que la Demanderesse vient de découvrir d'une manière inattendue que si l'on mélange par voie fondue à ladite matière active, à ladite charge et audit liant, une phase polymérique sacrificielle qui comprend au moins un poly(alcène carbonate) polyol, puis si l'on décompose cette phase sacrificielle selon ledit procédé de dégradation selon l'invention présenté ci-dessus, alors on obtient une composition d'électrode comprenant ledit résidu de dégradation (qui comprend le produit de ladite réaction de dépolymérisation) et présentant, après dépôt de la composition sur un collecteur métallique de courant, des capacités à dix cycles nettement supérieures à 130 mAh/g d'électrode (en particulier supérieures à 200 voire à 250 mAh/g d'électrode dans le cas d'une anode), avec un taux de rétention après dix cycles par rapport au premier cycle qui est supérieur à 90 %.

Ainsi, une composition polymérique selon l'invention pour électrode de batterie lithium-ion, la composition comprenant :
- une matière active apte à réaliser une insertion/ désinsertion réversible de lithium en ladite électrode,
- une charge électriquement conductrice,
- un liant polymérique, et
- un résidu de dégradation sous air à une température de dégradation comprise entre 120° C et 270° C d'une phase polymérique sacrificielle qui comprend au moins un polymère d'un alcène carbonate et qui a été préalablement mélangée par voie fondue à ladite matière active, à ladite charge et audit liant pour l'obtention d'un mélange précurseur de la composition, ladite phase polymérique sacrificielle présentant une température de décomposition thermique inférieure d'au moins 20 °C à celle dudit liant,
est caractérisée en ce que ledit résidu de dégradation comprend le produit d'une réaction de dépolymérisation dans une étuve en communication avec un flux d'air extérieur à ladite étuve, ledit flux d'air étant apte à extraire ledit au moins un poly(alcène carbonate) polyol au fur et à mesure de sa dégradation, par une amine primaire que comprend ledit mélange précurseur, dudit au moins un polymère d'un alcène carbonate qui est un poly(alcène carbonate) polyol.

Avantageusement, ledit résidu de dégradation présent dans ladite composition est un mélange liquide-solide qui peut comprendre :
- entre 10 % et 90 % (de préférence moins de 75 %) en masse d'un premier résidu comprenant un carbonate dudit alcène et/ou des traces oligomériques dudit poly(alcène carbonate) polyol, et
- entre 90 % et 10 % (de préférence plus de 25 %) en masse d'un second résidu comprenant un produit de dégradation de ladite amine primaire.

Encore plus avantageusement, ladite composition peut comprendre ledit résidu de dégradation selon une fraction massique inférieure à 5 % et de préférence comprise entre 0,1 % et 2 %.

De préférence, ladite composition est telle que ladite phase polymérique sacrificielle présente dans ledit mélange précurseur comprend :
- selon une fraction massique dans ladite phase supérieure à 50 %, ledit au moins un poly(alcène carbonate) polyol, qui est un diol aliphatique linéaire dont plus de 50 % en moles et de préférence plus de 80 % en moles des groupes d'extrémités sont des groupes hydroxyles avec lesquels interagit ladite amine primaire, et qui présente une masse moléculaire moyenne en poids comprise entre 500 g/mol et 5000 g/mol, et
- selon une fraction massique dans ladite phase inférieure à 50 %, un autre dit polymère d'un alcène carbonate de masse moléculaire moyenne en poids comprise entre 20 000 g/mol et 400 000 g/mol.

Selon un autre aspect de l'invention, ladite composition est telle que ledit résidu de dégradation peut comprendre ledit produit de ladite réaction qui est mise en oeuvre sans catalyseur organométallique dans une étuve au contact d'un flux d'air à la pression atmosphérique de 1,013 10⁵ Pa, de préférence avec un ratio massique amine primaire / poly(alcène carbonate) polyol(s) qui est inférieur ou égal à 10.

A titre de matière active avantageusement présente dans ladite composition selon une fraction massique à égale ou supérieure à 85 % et de préférence supérieure à 90 %, on peut notamment citer :
- pour une composition de cathode, un composé ou complexe polyanionique lithié tel qu'un phosphate d'un métal M lithié de formule LiMPO₄ revêtu de carbone (e.g. C-LiFePO₄) ou un oxyde métallique lithié par exemple de vanadium ou de cobalt, à titre non limitatif, et
- pour une composition d'anode, un graphite artificiel ou naturel de grade batteries Li-ion, ou bien un oxyde métallique mixte tel qu'un oxyde de titane lithié, par exemple.

On notera que cette fraction massique très élevée de la matière active dans ladite composition d'électrode permet de conférer une performance élevée à la batterie lithium-ion l'incorporant.

A titre de charge électriquement conductrice, qui est présente dans ladite composition selon une fraction massique de préférence comprise entre 1 % et 8 %, on peut notamment citer les noirs de carbone de haute pureté, les graphites expansés purifiés conducteurs, les nanofibres de carbones, les nanotubes de carbone, les graphènes et leurs mélanges.

A titre de liant polymérique, qui est présent dans ladite composition selon une fraction massique de préférence comprise entre 1 % et 8 %, on peut notamment citer tout élastomère (réticulé ou non) compatible avec ledit au moins un poly(alcène carbonate) polyol avec lequel il est destiné à être mélangé par voie fondue. Ce liant est encore plus préférentiellement choisi parmi les copolymères de butadiène et d'acrylonitrile hydrogénés ou non (HNBR ou NBR), les copolymères d'éthylène et d'un acrylate, les polyisoprènes et leurs mélanges. En variante, d'autres élastomères sont utilisables, étant précisé qu'il est préférable d'utiliser un liant assurant une continuité des propriétés élastiques sur une plage de température allant sensiblement de -20° C à 80° C, d'où l'utilisation préférentielle d'élastomères tels que les HNBR ou les copolymères d'éthylène et d'acrylate, notamment. La répartition homogène du liant dans la composition permet d'assurer la tenue mécanique de l'électrode.

D'une manière générale, il est possible d'ajouter aux compositions de l'invention des additifs spécifiques afin d'améliorer ou d'optimiser leur procédé de fabrication. On peut également ajouter des composés permettant la réticulation du liant ainsi que des coagents capables d'aider à la réticulation et à l'homogénéisation de celle-ci.

Une électrode selon l'invention apte à former une anode ou cathode de batterie lithium-ion, est telle que l'électrode comprend au moins un film constitué de ladite composition, et un collecteur métallique de courant en contact avec ledit au moins un film.

Une batterie lithium-ion selon l'invention comprenant au moins une cellule comportant une anode, une cathode et un électrolyte à base d'un sel de lithium et d'un solvant non aqueux, est telle que ladite anode et/ou ladite cathode est constituée de ladite électrode.

Comme indiqué ci-dessus en préambule, une autre utilisation selon l'invention dudit procédé de dégradation se rapporte au frittage de céramiques comprenant une poudre d'un matériau céramique et ledit au moins un poly(alcène carbonate) polyol à titre de liant à dégrader.

Un procédé de préparation selon l'invention de ladite composition polymérique d'électrode comprend successivement :
a) un mélangeage par voie fondue et sans évaporation de solvant de ladite matière active, dudit liant, de ladite charge électriquement conductrice et de ladite phase polymérique sacrificielle qui présente une température de décomposition thermique inférieure d'au moins 20° C à celle dudit liant, pour l'obtention d'un mélange précurseur de ladite composition,
b) un dépôt sous forme de film dudit mélange précurseur sur un collecteur métallique de courant, puis
c) une dégradation de ladite phase polymérique sacrificielle à ladite température comprise entre 120° C et 270° C, comprenant ladite réaction sous air de ladite amine primaire avec ledit au moins un polymère d'un alcène carbonate, dans une étuve en communication avec un flux d'air extérieur à ladite étuve, ledit flux d'air étant apte à extraire ledit au moins un poly(alcène carbonate) polyol au fur et à mesure de sa dégradation.

Avantageusement, l'étape c) peut être mise en oeuvre sans catalyseur organométallique entre 140° C et 250° C pendant une durée inclusivement comprise entre 30 minutes et 1 heure dans une étuve, au contact d'un flux d'air étant de préférence constitué d'air ambiant à la pression atmosphérique de 1,013 10⁵ Pa.

De préférence, ladite phase polymérique sacrificielle est présente dans ledit mélange précurseur selon une fraction massique comprise entre 20 % et 45 %, et comprend :
- selon une fraction massique dans ladite phase supérieure à 50 % et de préférence d'au moins 60 %, ledit au moins un poly(alcène carbonate) polyol, qui est un diol aliphatique linéaire dont plus de 50 % en moles et de préférence plus de 80 % en moles des groupes d'extrémités sont des groupes hydroxyles avec lesquels interagit ladite amine primaire, et qui présente une masse moléculaire moyenne en poids comprise entre 500 g/mol et 5000 g/mol, et
- selon une fraction massique dans ladite phase inférieure à 50 % et de préférence d'au plus 40 %, un autre dit polymère d'un alcène carbonate de type poly(alcène carbonate) polyol ou non, de masse moléculaire moyenne en poids comprise entre 20 000 g/mol et 400 000 g/mol.

Avantageusement, l'étape a) de mélangeage peut être mise en oeuvre dans un mélangeur interne ou une extrudeuse sans macroséparation de phases entre le liant et la phase polymérique sacrificielle dans ledit mélange précurseur, où le liant est dispersé de manière homogène dans la phase sacrificielle qui est continue ou bien forme une phase co-continue avec cette phase sacrificielle. On pourra se référer à WO-A1-2015/124835 pour la mise en oeuvre des étapes a) et b) ci-dessus, étant rappelé que la phase sacrificielle permet notamment de contrôler la porosité au sein de la composition par la quantité de phase sacrificielle introduite en la maîtrisant en termes de taille, de quantité et de morphologie des pores.

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
La figure 1 est un graphique montrant l'évolution du taux massique de dégradation d'un poly(alcène carbonate) polyol (PAC en abrégé) en fonction du ratio massique amine / PAC pour deux durées de réaction, par une dégradation à 140° C selon l'invention utilisant une amine primaire selon ledit second mode,
La figure 2 est un graphique montrant l'évolution du taux massique de dégradation du même PAC en fonction du ratio massique amine / PAC pendant ces mêmes durées, par une dégradation à 170° C selon l'invention utilisant la même amine primaire,
La figure 3 est un graphique montrant l'évolution du taux massique de dégradation du même PAC en fonction du ratio massique amine / PAC pour trois durées de réaction, par une dégradation à 140° C selon l'invention utilisant une amine primaire selon ledit premier mode, et
La figure 4 est un graphique montrant l'évolution du taux massique de dégradation du même PAC en fonction du ratio massique amine / PAC pour deux durées de réaction, par une dégradation à 140° C non conforme à l'invention utilisant une amine secondaire.

### Exemples selon l'invention et non conformes à l'invention de dégradation d'un poly(alcène carbonate) polyol respectivement par deux amines primaires et par une amine secondaire :

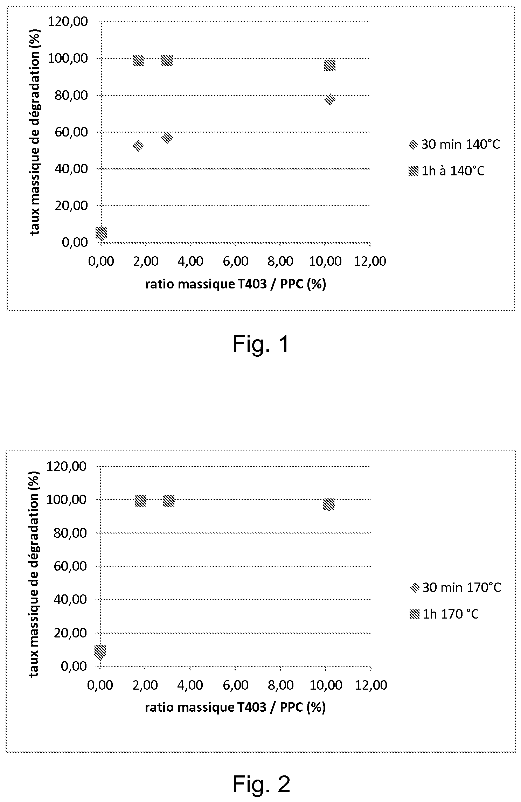

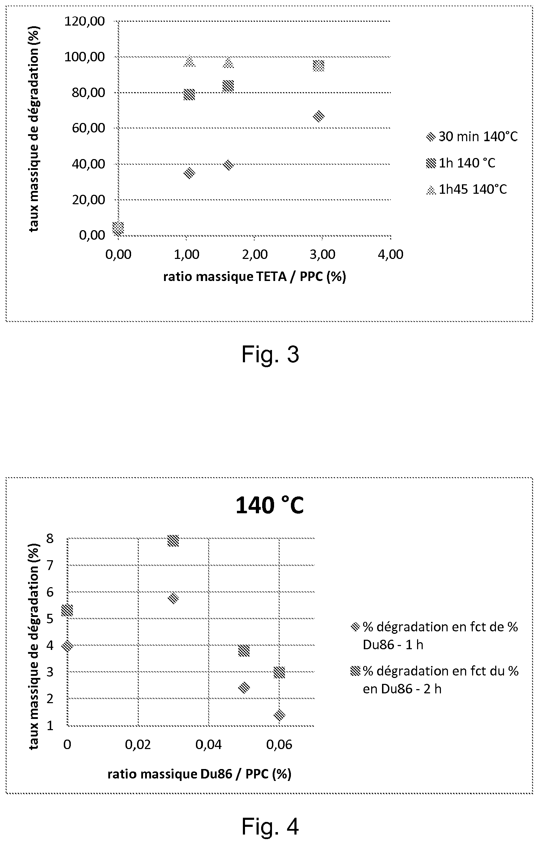

On a procédé à des essais de dégradation thermique, en étuve sous air à une température dans l'étuve de 140° C (figures 1, 3 et 4) ou 170° C (figure 2), de mélanges constitués :
- d'environ 5 g d'un poly(propylène carbonate) polyol de dénomination Converge@ Polyol 212-10 (commercialisé par Novomer, PPC en abrégé ci-dessous) qui est liquide à 25° C et présente une masse moléculaire moyenne en poids Mw d'environ 1 000 g/mol, et
- d'une masse variable d'une amine primaire (figures 1-3) ou secondaire (figure 4) mélangée à ce polymère dans un mélangeur interne Haake Polylab OS (capacité de 69 cm³) à une température entre 60 et 75°C.

On a quantifié la dégradation du PPC en isotherme, par mesure de sa perte de masse à différents temps.

En référence à la figure 1, on a soumis un mélange selon l'invention PPC - amine primaire de dénomination Jeffamine^{®} T-403 (Huntsman, triamine oligomérique selon la formule II précitée de type polyéther amine avec trois groupes NH₂ en bouts de chaînes aliphatiques) à un chauffage à 140° C pendant 30 min. et 1 h dans l'étuve ouverte à l'air ambiant, à chaque fois pour différents ratios massiques T-403 / PPC allant de 0 (essais témoin sans T-403) à 10 %. Ces essais montrent que la T-403 utilisée selon un ratio de seulement 2 % a dégradé presque complètement le PPC (perte de masse proche de 100 %) au bout d'1 h à 140° C, alors que le seul traitement thermique (ratio nul) n'avait quasiment pas dégradé le PPC.

En référence à la figure 2, on a soumis ce même mélange PPC - Jeffamine^{®} T-403 à un chauffage à 170° C pendant 30 min. et 1 h dans la même étuve ouverte à l'air ambiant, à chaque fois pour différents ratios massiques T-403 / PPC allant de 0 (essais témoin sans T-403) à 10 %. Ces essais montrent que la T-403 utilisée selon un ratio de seulement 2 % a dégradé presque complètement le PPC au bout de seulement 30 min. à 170° C, alors que le seul traitement thermique n'avait que peu dégradé le PPC.

En référence à la figure 3, on a soumis un autre mélange selon l'invention PPC - TETA (Merck, triéthylène tétramine) à un chauffage à 140° C pendant 30 min., 1 h et 1 h 45 min. dans la même étuve ouverte à l'air ambiant, à chaque fois pour différents ratios massiques TETA / PPC allant de 0 (essais témoin sans TETA) à 3 %. Ces essais montrent que la TETA utilisée selon un ratio de seulement 1 % a dégradé presque complètement le PPC (perte de masse proche de 100 %) au bout de 1 h 45 min. à 140° C, alors que le seul traitement thermique n'avait quasiment pas dégradé le PPC.

En référence à la figure 4, on a soumis un mélange non conforme à l'invention PPC - Dusantox 86 (Duslo, amine secondaire, Du86 en abrégé) à un chauffage à 140° C pendant 1 h et 2 h dans la même étuve ouverte à l'air ambiant, à chaque fois pour différents ratios massiques Du86 / PPC allant de 0 (essais témoin sans Du86) à 0,06 %. Ces essais montrent que la Du86 n'a quasiment pas dégradé le PPC à 140° C même après 2 h (perte de masse toujours inférieure ou égale à 8 % quel que soit le ratio choisi), à l'instar du seul traitement thermique (ratio nul).

### Exemples « témoin » et selon l'invention de réalisation d'électrodes pour batterie lithium-ion :

On a préparé une composition d'anode « témoin » C et une composition d'anode selon l'invention I au moyen des ingrédients suivants.
- Matière active: graphite artificiel de grade batterie lithium-ion.
- Liant : HNBR Zetpol^{®} 0020 (Zeon Chemicals L.P, comprenant 50 % d'unités acrylonitrile en masse).
- Charge conductrice : Graphite expansé purifié.
- Phase polymérique sacrificielle: coupage de deux polymères de propylène carbonate (PPC) de dénominations :
   * Converge@ Polyol 212-10 (Novomer) : poly(propylène carbonate) polyol liquide précité, et
   * QPAC^{®} 40 (Empower Materials) : poly(propylène carbonate) solide à 25° C (masse moléculaire moyenne Mw supérieure à 50 000 g/mol).

La composition I comprenait en outre l'amine primaire de dénomination Jeffamine^{®} T-403, contrairement à la composition C qui était dépourvue de toute amine.

On a préparé par voie fondue chacune des compositions d'anode C et I à l'aide d'un mélangeur interne de type Haake Polylab OS d'une capacité de 69 cm³ à une température entre 60° C et 75° C.

On a calandré les mélanges ainsi obtenus à température ambiante à l'aide d'un mélangeur externe à cylindres Scamex jusqu'à atteindre une épaisseur de 200 µm. On les a ensuite encore calandrés à 50° C afin d'obtenir des films de mélanges d'épaisseur de 50 µm que l'on a déposés sur un collecteur de cuivre à l'aide d'une calandre à feuille à 70° C.

Puis on a placé chaque ensemble collecteur - film ainsi obtenu dans une étuve sous air ambiant afin d'extraire de chaque film la phase polymérique sacrificielle (PPC solide et liquide). On a dégradé cette phase sacrificielle en soumettant chaque film à une rampe en température de 50°C à 250°C puis à une isotherme de 30 min. à 250° C, pour obtenir après extraction de cette phase un film de composition d'anode.

Le tableau 1 ci-après détaille les formulations des mélanges précurseurs (avant extraction) et des compositions obtenues (après extraction), en termes de fractions massiques dans chaque mélange et dans chaque composition, respectivement.

**Tableau 1 :**

| **Film d'anode témoin C** | | |
|---|---|---|
| | Mélange C avant extraction (m/m, %) | Composition C après extraction (m/m, %) |
| Liant : HNBR (Zetpol^{®} 0020) | 1,8 | 3 |
| Charge conductrice : | 1,8 | 3 |
| Graphite expansé purifié | | |
| Converge^{®} Polyol 212-10 | 25,6 | ≅ 0 |
| Polypropylène carbonate QPAC^{®} 40 | 13,8 | ≅ 0 |
| Matière active : Graphite artificiel | 57,0 | 94 |

| **Film d'anode selon l'invention I** | | |
|---|---|---|
| | Mélange I avant extraction (m/m, %) | Composition I après extraction (m/m, %) |
| Liant : HNBR (Zetpol^{®} 0020) | 1,8 | 3 |
| Charge conductrice : | 1,8 | 3 |
| Graphite expansé purifié | | |
| Converge^{®} Polyol 212-10 | 25,6 | ≅ 0 |
| QPAC^{®} 40 | 13,8 | ≅ 0 |
| Amine primaire : Jeffamine^{®} T-403 | 0,4 | traces |
| Matière active : Graphite artificiel | 57,0 | 94 |

La composition I selon l'invention présentait, selon une fraction massique inférieure à 1 %, un résidu de dégradation sous forme de mélange liquide-solide, produit de la réaction de dépolymérisation des polymères sacrificiels par l'amine primaire et qui comprenait dans cet exemple, après analyse :
- entre 50 % et 75 % en masse d'un carbonate de propylène et de traces oligomériques des polymères sacrificiels, et
- entre 25 % et 50 % en masse d'un résidu oxydé de l'amine primaire.

On a caractérisé chaque anode C, I obtenue par le protocole électrochimique suivant.

On a découpé à l'emporte-pièce les anodes C et I (diamètre 16 mm, surface 2,01 cm²) et on les a pesées. On a déterminé la masse de matière active en soustrayant la masse du collecteur de courant nu préparé selon les mêmes conditions (traitements thermiques). On les a mises dans un four directement relié à une boîte à gants. On les a séchées à 100° C sous vide pendant 12 heures, puis on les a transférées dans la boîte à gants (atmosphère d'argon : 0,1 ppm H₂O et 0,1 ppm O₂).

On a ensuite assemblé les piles boutons (format CR1620) en utilisant une contre-électrode de lithium métallique, un séparateur Cellgard 2500 et un électrolyte de grade batterie LiPF6 EC/DMC (50/50 en ratio massique). On a caractérisé les piles sur un potentiostat Biologic VMP3, en réalisant des cycles de charge/décharge à courant constant entre 1 V et 10 mV. Le régime était de C/5 en considérant la masse de matière active et une capacité théorique de 372 mAh/g. Afin de comparer les performances des différents systèmes, l'on a évalué les capacités (exprimées en mAh/g d'anode) lors de la première décharge pour la désinsertion de lithium (capacité initiale après le premier cycle) et à la dixième décharge (capacité à dix cycles). On a en outre calculé le taux de rétention R (%) pour le rapport de la capacité à dix cycles sur la capacité au premier cycle.

Le tableau 2 ci-après donne les résultats de cette caractérisation.

**Tableau 2 :**

| Anodes | Capacité initiale (mAh/g) | Capacité à 10 cycles (mAh/g) - % rétention/1^{er} cycle |
|---|---|---|
| « témoin » C | 200 | 210 - 105 % |
| **Invention I** | **260** | **260 - 100 %** |

Ces résultats montrent que l'incorporation de l'amine primaire au mélange de film d'anode I, permet, après dégradation selon l'invention des polymères de propylène carbonate présents dans ce mélange à titre de phase sacrificielle, d'obtenir par cette dégradation à la fois thermique et chimique une composition conférant à l'anode :
- une capacité initiale nettement améliorée, qui est de 30 % supérieure à celle de l'anode C obtenue sans incorporation d'amine primaire au mélange (i.e. par une dégradation exclusivement thermique des polymères sacrificiels), et
- une capacité à dix cycles demeurant très élevée, qui est de 25 % supérieure à celle de l'anode C et qui témoigne d'un maintien intégral de la capacité entre les premier et dixième cycles.

## Revendications

1. Procédé de dégradation d'au moins un polymère d'un alcène carbonate à une température comprise entre 120° C et 270° C, **caractérisé en ce que** le procédé comprend une réaction sous air d'une amine primaire avec ledit au moins un polymère qui est un poly(alcène carbonate) polyol, ladite réaction dépolymérisant ledit au moins un polymère pour l'obtention d'un résidu de dégradation non polymérique et étant mise en oeuvre dans une étuve en communication avec un flux d'air extérieur à ladite étuve, ledit flux d'air étant apte à extraire ledit au moins un poly(alcène carbonate) polyol au fur et à mesure de sa dégradation.

2. Procédé selon la revendication 1, dans lequel ledit flux d'air est formé d'air ambiant à la pression atmosphérique de 1,013 10⁵ Pa.

3. Procédé selon la revendication 1 ou 2, dans lequel ladite amine primaire dépolymérise par ladite réaction ledit au moins un poly(alcène carbonate) polyol sans catalyseur organométallique pour obtenir ledit résidu de dégradation qui est vaporisable, le rapport massique dudit résidu sur le(s)dit(s) poly(alcène carbonate) polyol(s) initial(aux) étant compris entre 0,2 % et 5 % et de préférence entre 0,5 % et 2 %,
de préférence dans lequel ledit résidu de dégradation est un mélange liquide-solide comprenant :
- entre 10 % et 90 % en masse d'un premier résidu comprenant un carbonate dudit alcène et/ou des traces oligomériques dudit au moins un poly(alcène carbonate) polyol, et
- entre 90 % et 10 % en masse d'un second résidu comprenant un produit de dégradation de ladite amine primaire,
et de préférence dans lequel pour obtenir ledit résidu de dégradation, ladite réaction est mise en oeuvre entre 130° C et 260° C pendant au plus 2 heures.

4. Procédé selon une des revendications précédentes, dans lequel ladite amine primaire est choisie parmi les monoamines et polyamines aliphatiques ou aromatiques présentant :
- dans le cas où ladite amine primaire est un monomère, un point d'ébullition supérieur à 180° C et de préférence égal ou supérieur à 200° C à la pression atmosphérique de 1,013 10⁵ Pa, et
- dans le cas où ladite amine primaire est un oligomère ou un polymère, une masse moléculaire moyenne en poids inférieure ou égale à 2000 g/mol et de préférence inférieure ou égale à 1000 g/mol.

5. Procédé selon la revendication 4, dans lequel ladite amine primaire est une monoamine aliphatique monomérique choisie parmi les alkylamines non volatiles, de préférence une alkylamine avec un groupe alkyl de C12 à C16 telle que la n-dodécylamine et la n-hexadécylamine.

6. Procédé selon la revendication 4, dans lequel ladite amine primaire est une monoamine aromatique monomérique choisie parmi les anilines et les dérivés d'aniline, de préférence parmi les alkylanilines telles que les toluidines et les diméthylanilines.

7. Procédé selon la revendication 4, dans lequel ladite amine primaire est une polyamine aliphatique oligomérique ou polymérique de type polyéther amine, de préférence choisie parmi les diamines et les triamines d'un polyoxyalcène.

8. Procédé selon une des revendications précédentes, dans lequel ledit au moins un poly(alcène carbonate) polyol est un diol aliphatique linéaire dont plus de 50 % en moles et de préférence plus de 80 % en moles des groupes d'extrémités sont des groupes hydroxyles avec lesquels interagit ladite amine primaire,
et de préférence dans lequel ledit au moins un poly(alcène carbonate) polyol présente une masse moléculaire moyenne en poids comprise entre 500 g/mol et 5000 g/mol, étant de préférence choisi parmi les poly(éthylène carbonate) diols et les poly(propylène carbonate) diols de masse moléculaire moyenne en poids comprise entre 700 g/mol et 2000 g/mol.

9. Procédé selon une des revendications précédentes, dans lequel le ratio massique amine primaire / poly(alcène carbonate) polyol(s) pour ladite réaction est inférieur ou égal à 10 % et de préférence inclusivement compris entre 1 % et 4 %.

10. Composition polymérique pour électrode de batterie lithium-ion, la composition comprenant :
- une matière active apte à réaliser une insertion/ désinsertion réversible de lithium en ladite électrode,
- une charge électriquement conductrice,
- un liant polymérique de préférence élastomère, et
- un résidu de dégradation sous air et à une température de dégradation comprise entre 120° C et 270° C d'une phase polymérique sacrificielle qui comprend au moins un polymère d'un alcène carbonate et qui a été préalablement mélangée par voie fondue à ladite matière active, à ladite charge et audit liant pour l'obtention d'un mélange précurseur de la composition, ladite phase polymérique sacrificielle présentant une température de décomposition thermique inférieure d'au moins 20° C à celle dudit liant,
**caractérisée en ce que** ledit résidu de dégradation comprend le produit d'une réaction de dépolymérisation dans une étuve en communication avec un flux d'air extérieur à ladite étuve, ledit flux d'air étant apte à extraire ledit au moins un poly(alcène carbonate) polyol au fur et à mesure de sa dégradation, par une amine primaire que comprend ledit mélange précurseur, dudit au moins un polymère d'un alcène carbonate qui est un poly(alcène carbonate) polyol,
et de préférence **en ce que** ledit résidu de dégradation est un mélange liquide-solide qui comprend :
- entre 10 % et 90 % en masse d'un premier résidu comprenant un carbonate dudit alcène et/ou des traces oligomériques dudit poly(alcène carbonate) polyol, et
- entre 90 % et 10 % en masse d'un second résidu comprenant un produit de dégradation de ladite amine primaire.

11. Composition selon la revendication 10, dans laquelle la composition comprend ledit résidu de dégradation selon une fraction massique inférieure à 5 % et de préférence comprise entre 0,1 % et 2 %,
de préférence dans laquelle ladite phase polymérique sacrificielle comprend :
- selon une fraction massique dans ladite phase supérieure à 50 %, ledit au moins un poly(alcène carbonate) polyol, qui est un diol aliphatique linéaire dont plus de 50 % en moles et de préférence plus de 80 % en moles des groupes d'extrémités sont des groupes hydroxyles avec lesquels interagit ladite amine primaire, et qui présente une masse moléculaire moyenne en poids comprise entre 500 g/mol et 5000 g/mol, et
- selon une fraction massique dans ladite phase inférieure à 50 %, un autre dit polymère d'un alcène carbonate de masse moléculaire moyenne en poids comprise entre 20 000 g/mol et 400 000 g/mol,
et de préférence dans laquelle ledit résidu de dégradation comprend ledit produit de ladite réaction qui est mise en oeuvre sans catalyseur organométallique dans ladite étuve au contact dudit flux d'air à la pression atmosphérique de 1,013 10⁵ Pa, de préférence avec un ratio massique amine primaire / poly(alcène carbonate) polyol(s) qui est inférieur ou égal à 10.

12. Electrode apte à former une anode ou cathode de batterie lithium-ion, **caractérisée en ce que** l'électrode comprend au moins un film constitué d'une composition selon une des revendications précédentes, et un collecteur métallique de courant en contact avec ledit au moins un film.

13. Batterie lithium-ion comprenant au moins une cellule comportant une anode, une cathode et un électrolyte à base d'un sel de lithium et d'un solvant non aqueux, **caractérisée en ce que** ladite anode et/ou ladite cathode est constituée d'une électrode selon la revendication 12.

14. Utilisation d'un procédé selon une des revendications 1 à 9 pour le frittage de céramiques comprenant une poudre d'un matériau céramique et ledit au moins un poly(alcène carbonate) polyol à titre de liant à dégrader.

15. Procédé de préparation d'une composition selon une des revendications 10 et 11, **caractérisé en ce que** le procédé comprend successivement :
a) un mélangeage par voie fondue et sans évaporation de solvant de ladite matière active, dudit liant, de ladite charge électriquement conductrice et de ladite phase polymérique sacrificielle qui présente une température de décomposition thermique inférieure d'au moins 20° C à celle dudit liant, pour l'obtention d'un mélange précurseur de ladite composition,
b) un dépôt sous forme de film dudit mélange précurseur sur un collecteur métallique de courant, puis
c) une dégradation de ladite phase polymérique sacrificielle à ladite température comprise entre 120° C et 270° C, comprenant ladite réaction sous air de ladite amine primaire avec ledit au moins un polymère d'un alcène carbonate, dans une étuve en communication avec un flux d'air extérieur à ladite étuve, ledit flux d'air étant apte à extraire ledit au moins un poly(alcène carbonate) polyol au fur et à mesure de sa dégradation,
de préférence **en ce que** l'étape c) est mise en oeuvre sans catalyseur organométallique entre 140° C et 250° C pendant une durée inclusivement comprise entre 30 minutes et 1 heure dans ladite étuve, ledit flux d'air étant de préférence constitué d'air ambiant à la pression atmosphérique de 1,013 10⁵ Pa,
et de préférence **en ce que** ladite phase polymérique sacrificielle est présente dans ledit mélange précurseur selon une fraction massique comprise entre 20 % et 45 %, et comprend :
- selon une fraction massique dans ladite phase supérieure à 50 % et de préférence d'au moins 60 %, ledit au moins un poly(alcène carbonate) polyol, qui est un diol aliphatique linéaire dont plus de 50 % en moles et de préférence plus de 80 % en moles des groupes d'extrémités sont des groupes hydroxyles avec lesquels interagit ladite amine primaire, et qui présente une masse moléculaire moyenne en poids comprise entre 500 g/mol et 5000 g/mol, et
- selon une fraction massique dans ladite phase inférieure à 50 % et de préférence d'au plus 40 %, un autre dit polymère d'un alcène carbonate de type poly(alcène carbonate) polyol ou non, de masse moléculaire moyenne en poids comprise entre 20 000 g/mol et 400 000 g/mol.

## Patentansprüche

1. Verfahren zum Abbau wenigstens eines Polymers eines Alkencarbonats bei einer Temperatur zwischen 120 °C und 270 °C, **dadurch gekennzeichnet, dass** das Verfahren eine Reaktion eines primären Amins mit dem wenigstens einen Polymer, das ein Poly(alkencarbonat)polyol ist, an der Luft umfasst, wobei die Reaktion das wenigstens eine Polymer zum Erhalt eines nicht-polymeren Abbaurückstands depolymerisiert und in einem Gefäß durchgeführt wird, das mit einem Luftstrom außerhalb des Gefäßes in Verbindung steht, wobei der Luftstrom das wenigstens eine Poly(alkencarbonat)polyol im Zuge seines Abbaus entziehen kann.

2. Verfahren nach Anspruch 1, wobei der Luftstrom aus Umgebungsluft mit einem atmosphärischen Druck von 1,013 10⁵ Pa gebildet ist.

3. Verfahren nach Anspruch 1 oder 2, wobei das primäre Amin durch die Reaktion das wenigstens eine Poly(alkencarbonat)polyol ohne metallorganischen Katalysator depolymerisiert, um den Abbaurückstand zu erhalten, der verdampfbar ist, wobei das Massenverhältnis des Rückstandes zu dem (den) ursprünglichen Poly(alkencarbonat)polyol(en) zwischen 0,2 % und 5 % und bevorzugt zwischen 0,5 % und 2 % liegt, wobei der Abbaurückstand bevorzugt ein Flüssig-Fest-Gemisch ist, umfassend:
- zwischen 10 Gew.-% und 90 Gew.-% eines ersten Rückstands, der ein Carbonat des Alkens und/oder oligomerische Spuren des wenigstens einen Poly(alkencarbonat)polyols umfasst, und
- zwischen 90 und 10 Gew.-% eines zweiten Rückstands, der ein Abbauprodukt des primären Amins umfasst,
und bevorzugt wobei zur Gewinnung des Abbaurückstands die Reaktion bei 130 C bis 260 °C über einen Zeitraum von höchstens 2 Stunden durchgeführt wird.

4. Verfahren nach einem der vorhergehenden Ansprüche, wobei das primäre Amin aus aliphatischen oder aromatischen Monoaminen und Polyaminen gewählt ist, die folgendes aufweisen:
- falls das primäre Amin ein Monomer ist, einen Siedepunkt von mehr als 180 °C und bevorzugt gleich oder höher als 200 °C bei einem atmosphärischen Druck von 1,013 10⁵ Pa, und
- falls das primäre Amin ein Oligomer oder ein Polymer ist, ein gewichtsmittleres Molekulargewicht von kleiner gleich 2.000 g/mol und bevorzugt kleiner gleich 1.000 g/mol.

5. Verfahren nach Anspruch 4, wobei das primäre Amin ein monomeres aliphatisches Monoamin ist, das aus nichtflüchtigen Alkylaminen gewählt ist, bevorzugt ein Alkylamin mit einer C12- bis C16-Alkylgruppe, wie n-Dodecylamin und n-Hexadecylamin.

6. Verfahren nach Anspruch 4, wobei das primäre Amin ein monomeres aromatisches Monoamin ist, das aus Anilinen und Anilinderivaten, bevorzugt aus Alkylanilinen wie Toluidinen und Dimethylanilinen, gewählt ist.

7. Verfahren nach Anspruch 4, wobei das primäre Amin ein oligomeres aliphatisches oder polymeres Polyamin vom Typ Polyetheramin ist, bevorzugt gewählt aus den Diaminen und Triaminen eines Polyoxyalkens.

8. Verfahren nach einem der vorhergehenden Ansprüche, wobei das wenigstens eine Poly(alkencarbonat)polyol ein lineares aliphatisches Diol ist, bei dem mehr als 50 Mol-% und bevorzugt mehr als 80 Mol-% der Endgruppen Hydroxylgruppen sind, mit denen das primäre Amin in Wechselwirkung tritt,
und bevorzugt wobei das wenigstens eine Poly(alkencarbonat)polyol ein gewichtsmittleres Molekulargewicht zwischen 500 g/mol und 5.000 g/mol aufweist, und bevorzugt aus Poly(ethylencarbonat)diolen und Poly(propylencarbonat)diolen mit einem gewichtsmittleren Molekulargewicht zwischen 700 g/mol und 2.000 g/mol gewählt ist.

9. Verfahren nach einem der vorhergehenden Ansprüche, wobei das Massenverhältnis primäres Amin/Poly(alkencarbonat)polyol(e) für diese Reaktion kleiner gleich 10 % und bevorzugt einschließlich zwischen 1 % und 4 % ist.

10. Polymere Zusammensetzung für eine Elektrode einer Lithium-Ionen-Batterie, wobei die Zusammensetzung umfasst:
- ein aktives Material, das in der Lage ist, eine reversible Einführung/Freisetzung von Lithium in die/aus der Elektrode zu bewirken,
- einen elektrisch leitfähigen Füllstoff,
- ein polymeres, bevorzugt elastomeres Bindemittel, und
- einen Abbaurückstand unter Luft und bei einer Abbautemperatur zwischen 120 °C und 270 °C einer polymeren Opferphase, die wenigstens ein Polymer eines Alkencarbonats umfasst und die zuvor mit dem aktiven Material, dem Füllstoff und dem Bindemittel schmelzvermischt wurde, um eine Vorläufermischung der Zusammensetzung zu erhalten, wobei die polymere Opferphase eine thermische Zersetzungstemperatur aufweist, die wenigstens 20 °C niedriger als die des Bindemittels ist,
**dadurch gekennzeichnet, dass** der Abbaurückstand das Produkt einer Depolymerisationsreaktion in einem Gefäß in Verbindung mit einem Luftstrom außerhalb des Gefäßes umfasst, wobei der Luftstrom dazu geeignet ist, das wenigstens eine Poly(alkencarbonat)polyol im Zuge seines Abbaus, durch ein in der Vorläufermischung enthaltenes primäres Amin des einen Alkencarbonats, das ein Poly(alkencarbonat)polyol ist, zu extrahieren
und bevorzugt dadurch, dass der Abbaurückstand eine Flüssigkeit-Feststoff-Mischung ist, die umfasst:
- zwischen 10 Gew.-% und 90 Gew.-% eines ersten Rückstands, der ein Carbonat des Alkens und/oder oligomerische Spuren des Poly(alkencarbonat)polyols umfasst, und
- zwischen 90 Gew.-% und 10 Gew.-% eines zweiten Rückstands, der ein Abbauprodukt des primären Amins umfasst.

11. Zusammensetzung nach Anspruch 10, wobei die Zusammensetzung den Abbaurückstand in einem Massenanteil von weniger als 5 % und bevorzugt zwischen 0,1 % und 2 % enthält,
bevorzugt wobei die polymerische Opferphase umfasst:
- in einem Massenanteil in der Phase von mehr als 50 % das wenigstens eine Poly(alkencarbonat)polyol, das ein lineares aliphatisches Diol ist, bei dem mehr als 50 Mol-% und bevorzugt mehr als 80 Mol-% der Endgruppen Hydroxylgruppen sind, mit denen das primäre Amin wechselwirkt, und das ein gewichtsmittleres Molekulargewicht zwischen 500 g/mol und 5.000 g/mol aufweist, und
- in einem Massenanteil in der Phase von weniger als 50 % ein anderes sogenanntes Alkencarbonatpolymer mit einem gewichtsmittleren Molekulargewicht zwischen 20.000 g/mol und 400.000 g/mol,
und bevorzugt wobei der Abbaurückstand das Produkt der Reaktion umfasst, die ohne einen metallorganischen Katalysator in dem Gefäß in Kontakt mit dem Luftstrom bei einem atmosphärischen Druck von 1,013 10⁵ Pa durchgeführt wird, bevorzugt mit einem Massenverhältnis von primärem Amin zu Poly(alkencarbonat)polyol(en), das kleiner oder gleich 10 ist.

12. Elektrode, die dazu geeignet ist, eine Anode oder Kathode einer Lithium-Ionen-Batterie zu bilden, **dadurch gekennzeichnet, dass** die Elektrode wenigstens einen Film aus einer Zusammensetzung nach einem der vorhergehenden Ansprüche und einen metallischen Stromabnehmer in Kontakt mit dem wenigstens einen Film umfasst.

13. Lithium-Ionen-Batterie, die wenigstens eine Zelle mit einer Anode, einer Kathode und einem Elektrolyten auf der Basis eines Lithiumsalzes und eines nichtwässrigen Lösungsmittels umfasst, **dadurch gekennzeichnet, dass** die Anode und/oder die Kathode aus einer Elektrode nach Anspruch 12 gebildet ist.

14. Verwendung eines Verfahrens nach einem der Ansprüche 1 bis 9 zum Sintern von Keramiken, die ein Pulver einer keramischen Masse und das wenigstens eine Poly(alkencarbonat)polyol als abzubauendes Bindemittel enthalten.

15. Verfahren zur Herstellung einer Zusammensetzung nach einem der Ansprüche 10 und 11, **dadurch gekennzeichnet, dass** das Verfahren nacheinander umfasst:
a) Schmelzmischen des aktiven Materials, des Bindemittels, des elektrisch leitfähigen Füllstoffs und der polymeren Opferphase, deren thermische Zersetzungstemperatur wenigstens 20 °C unter der des Bindemittels liegt, ohne Verdampfung des Lösungsmittels, um eine Vorläufermischung der Zusammensetzung zu erhalten,
b) Abscheidung der Vorläufermischung in Form eines Films auf einem metallischen Stromabnehmer, dann
c) Abbau der Opferpolymerphase bei der Temperatur zwischen 120 °C und 270 °C, einschließlich der Reaktion des primären Amins mit dem wenigstens einen Polymer eines Alkencarbonats unter Luftabschluss, in einem Gefäß in Verbindung mit einem Luftstrom außerhalb des Gefäßes, wobei der Luftstrom in der Lage ist, das wenigstens eine Poly(alkencarbonat)polyol im Zuge seines Abbaus zu extrahieren,
bevorzugt dadurch, dass der Schritt ohne metallorganischen Katalysator bei 140 °C bis 250 °C über einen Zeitraum von einschließlich 30 Minuten bis 1 Stunde in dem Gefäß durchgeführt wird, wobei der Luftstrom bevorzugt aus Umgebungsluft mit einem atmosphärischen Druck von 1,013 10⁵ Pa besteht, und bevorzugt dadurch, dass die Opferpolymerphase in der Vorläufermischung mit einem Massenanteil zwischen 20 % und 45 % vorliegt und umfasst:
- mit einem Massenanteil in der Phase von mehr als 50 % und bevorzugt wenigstens 60 % das wenigstens eine Poly(alkencarbonat)polyol, das ein lineares aliphatisches Diol ist, bei dem mehr als 50 Mol-% und bevorzugt mehr als 80 Mol-% der Endgruppen Hydroxylgruppen sind, mit denen das primäre Amin wechselwirkt, und das ein gewichtsmittleres Molekulargewicht zwischen 500 g/mol und 5.000 g/mol aufweist, und
- mit einem Massenanteil in der Phase von weniger als 50 % und bevorzugt höchstens 40 % ein anderes sogenanntes Polymer eines Alkencarbonats vom Typ Poly(alkencarbonat)polyol oder nicht mit einem gewichtsmittleren Molekulargewicht zwischen 20.000 g/mol und 400.000 g/mol.

## Claims

1. Process for the degradation of at least one polymer of an alkene carbonate at a temperature of between 120°C and 270°C, **characterized in that** the process comprises a reaction under air of a primary amine with the said at least one polymer which is a poly(alkene carbonate) polyol, the said reaction depolymerizing the said at least one polymer in order to obtain a non-polymeric degradation residue and being carried out in an oven in communication with a stream of air exterior to the said oven, the said stream of air being capable of extracting the said at least one poly(alkene carbonate) polyol as it is degraded.

2. Process according to Claim 1, in which the said stream of air is formed of ambient air at the atmospheric pressure of 1.013 x 10⁵ Pa.

3. Process according to Claim 1 or 2, in which the said primary amine depolymerizes the said at least one poly(alkene carbonate) polyol by the said reaction without organometallic catalyst in order to obtain the said degradation residue which is vaporizable, the ratio by weight of the said residue to the said initial poly(alkene carbonate) polyol(s) being between 0.2% and 5% and preferably between 0.5% and 2%,
preferably in which the said degradation residue is a liquid/solid mixture comprising:
- between 10% and 90% by weight of a first residue comprising a carbonate of the said alkene and/or oligomeric traces of the said at least one poly(alkene carbonate) polyol, and
- between 90% and 10% by weight of a second residue comprising a degradation product of the said primary amine,
and preferably in which, in order to obtain the said degradation residue, the said reaction is carried out between 130°C and 260°C for at most 2 hours.

4. Process according to one of the preceding claims, in which the said primary amine is chosen from aliphatic or aromatic monoamines and polyamines exhibiting:
- in the case where the said primary amine is a monomer, a boiling point of greater than 180°C and preferably equal to or greater than 200°C at atmospheric pressure of 1.013 x 10⁵ Pa, and
- in the case where the said primary amine is an oligomer or a polymer, a weight-average molecular weight of less than or equal to 2000 g/mol and preferably of less than or equal to 1000 g/mol.

5. Process according to Claim 4, in which the said primary amine is a monomeric aliphatic monoamine chosen from non-volatile alkylamines, preferably an alkylamine with a C₁₂ to C₁₆ alkyl group, such as n-dodecylamine and n-hexadecylamine.

6. Process according to Claim 4, in which the said primary amine is a monomeric aromatic monoamine chosen from anilines and aniline derivatives, preferably from alkylanilines, such as toluidines and dimethylanilines.

7. Process according to Claim 4, in which the said primary amine is an oligomeric or polymeric aliphatic polyamine of polyetheramine type, preferably chosen from diamines and triamines of a polyoxyalkene.

8. Process according to one of the preceding claims, in which the said at least one poly(alkene carbonate) polyol is a linear aliphatic diol, more than 50 mol% and preferably more than 80 mol% of the end groups of which are hydroxyl groups with which the said primary amine interacts,
and preferably in which the said at least one poly(alkene carbonate) polyol exhibits a weight-average molecular weight of between 500 g/mol and 5000 g/mol, preferably being chosen from polyethylene carbonate) diols and polypropylene carbonate) diols with a weight-average molecular weight of between 700 g/mol and 2000 g/mol.

9. Process according to one of the preceding claims, in which the primary amine/poly(alkene carbonate) polyol(s) ratio by weight for the said reaction is less than or equal to 10% and preferably between 1% and 4% inclusive.

10. Polymeric composition for a lithium-ion battery electrode, the composition comprising:
- an active material capable of producing a reversible insertion/deinsertion of lithium in the said electrode,
- an electrically conductive filler,
- a polymeric binder, preferably elastomeric, and
- a residue from the degradation, under air and at a degradation temperature of between 120°C and 270°C, of a sacrificial polymeric phase which comprises at least one polymer of an alkene carbonate and which has been melt blended beforehand with the said active material, with the said filler and with the said binder in order to obtain a precursor mixture of the composition, the said sacrificial polymeric phase exhibiting a thermal decomposition temperature lower by at least 20°C than that of the said binder,
**characterized in that** the said degradation residue comprises the product of a depolymerization reaction in an oven in communication with a stream of air exterior to the said oven, the said stream of air being capable of extracting the said at least one poly(alkene carbonate) polyol as it is degraded, by a primary amine which the said precursor mixture comprises, of the said at least one polymer of an alkene carbonate which is a poly(alkene carbonate) polyol,
and preferably in which the said degradation residue is a liquid/solid mixture which comprises:
- between 10% and 90% by weight of a first residue comprising a carbonate of the said alkene and/or oligomeric traces of the said poly(alkene carbonate) polyol, and
- between 90% and 10% by weight of a second residue comprising a degradation product of the said primary amine.

11. Composition according to Claim 10, in which the composition comprises the said degradation residue according to a fraction by weight of less than 5% and preferably of between 0.1% and 2%,
preferably in which the said sacrificial polymeric phase comprises:
- according to a fraction by weight in the said phase of greater than 50%, the said at least one poly(alkene carbonate) polyol, which is a linear aliphatic diol, more than 50 mol% and preferably more than 80 mol% of the end groups of which are hydroxyl groups with which the said primary amine interacts, and which exhibits a weight-average molecular weight of between 500 g/mol and 5000 g/mol, and
- according to a fraction by weight in the said phase of less than 50%, another said polymer of an alkene carbonate with a weight-average molecular weight of between 20 000 g/mol and 400 000 g/mol,
and preferably in which the said degradation residue comprises the said product of the said reaction which is carried out without organometallic catalyst in said oven in contact with said stream of air at the atmospheric pressure of 1.013 x 10⁵ Pa, preferably with a primary amine/poly(alkene carbonate) polyol(s) ratio by weight which is less than or equal to 10.

12. Electrode capable of forming a lithium-ion battery anode or cathode, **characterized in that** the electrode comprises at least one film consisting of a composition according to one of the preceding claims and a metal current collector in contact with the said at least one film.

13. Lithium-ion battery comprising at least one cell comprising an anode, a cathode and an electrolyte based on a lithium salt and on a non-aqueous solvent, **characterized in that** the said anode and/or the said cathode consists of an electrode according to Claim 12.

14. Use of a process according to one of Claims 1 to 9 for the sintering of ceramics comprising a powder of a ceramic material and the said at least one poly(alkene carbonate) polyol as binder to be degraded.

15. Process for the preparation of a composition according to one of Claims 10 and 11, **characterized in that** the process successively comprises:
a) melt blending, without evaporation of solvent, the said active material, the said binder, the said electrically conductive filler and the said sacrificial polymeric phase which exhibits a thermal decomposition temperature lower by at least 20°C than that of the said binder, in order to obtain a precursor mixture of the said composition,
b) depositing, in the film form, the said precursor mixture on a metal current collector, then
c) degrading the said sacrificial polymeric phase at the said temperature of between 120°C and 270°C, comprising the said reaction under air of the said primary amine with the said at least one polymer of an alkene carbonate, in an oven in communication with a stream of air exterior to the said oven, the said stream of air being capable of extracting the said at least one poly(alkene carbonate) polyol as it is degraded,
preferably in which stage c) is carried out without organometallic catalyst between 140°C and 250°C for a period of time of between 30 minutes and 1 hour inclusive in said oven, said stream of air preferably consisting of ambient air at the atmospheric pressure of 1.013 x 10⁵ Pa,
and preferably in which the said sacrificial polymeric phase is present in the said precursor mixture according to a fraction by weight of between 20% and 45% and comprises:
- according to a fraction by weight in the said phase of greater than 50% and preferably of at least 60%, the said at least one poly(alkene carbonate) polyol, which is a linear aliphatic diol, more than 50 mol% and preferably more than 80 mol% of the end groups of which are hydroxyl groups with which the said primary amine interacts, and which exhibits a weight-average molecular weight of between 500 g/mol and 5000 g/mol, and
- according to a fraction by weight in the said phase of less than 50% and preferably of at most 40%, another said polymer of an alkene carbonate of or not of poly(alkene carbonate) polyol type with a weight-average molecular weight of between 20 000 g/mol and 400 000 g/mol.
